# EUROPÄISCHE PATENTANMELDUNG

(11) **EP 2 479 874 A1**
(43) Veröffentlichungstag der Anmeldung: **25.07.2012**
(21) Anmeldenummer: 11151808.0
(22) Anmeldetag: 24.01.2011
(51) Int. Cl.: H02K 5/20

(54) **Kühlmantel mit mäanderförmigem Kühlsystem**

(71) Anmelder: Siemens Aktiengesellschaft, 80333 München (DE)
(72) Erfinder: Müller, Jörg, 97720, Nüdlingen (DE); Tropoja, Ardian, 97702, Münnerstadt (DE)

(57) **Zusammenfassung**

Es soll ein kostengünstiges, kompaktes und wirkungsvolles Kühlsystem für eine elektrische Maschine bereitgestellt werden. Hierzu wird ein Kühlmantel vorgeschlagen, der als Strangpressprofil hergestellt ist, und der mehrere in Richtung des Pressstrangs des Strangpressprofils verlaufende Stege (3) aufweist. Jeder Steg (3) trennt zwei benachbarte Kühlkanäle (13,14,15) des Kühlmantels voneinander. Die Kühlkanäle (13,14,15) des Kühlmantels bilden ein mäanderförmiges Kühlsystem (12). Senkrecht zu den Stegen (3) verlaufende Passagen des Kühlsystems sind gebildet durch je eine Aussparung (8) in jedem der Stege (3) an einer der Stirnseiten des Kühlmantels oder durch Aussparungen in Lagerschilden (10,11), die an der Stirnseiten des Kühlmantels befestigt sind. Damit lässt sich ein hochwirksames Kühlsystem realisieren.

## Beschreibung

Die vorliegende Erfindung betrifft einen Kühlmantel für eine elektrische Maschine, der als Strangpressprofil hergestellt ist, und der mehrere in Richtung des Pressstrangs des Strangpressprofils verlaufende Stege aufweist, wobei jeder Steg zwei benachbarte Kühlkanäle des Kühlmantels voneinander trennt.

Elektroantriebe mit höherer Leistung werden häufig mit geeigneten Kühlsystemen ausgestattet. Insbesondere werden auch Servomotoren für den Einsatz als Fahrantrieb eines Kraftfahrzeugs mit derartigen Kühlsystemen ausgestattet. Die serientaugliche Umsetzung und Herstellung solcher Kühlsysteme ist oftmals mit hohem Aufwand verbunden. Dies hat entsprechende Kosten zur Folge. Daher ist man bestrebt, geeignete Kühlsysteme für elektrische Maschinen mit möglichst geringem Herstellungsaufwand produzieren zu können.

Darüber hinaus ist es von vorrangiger Bedeutung, dass die Kühlsysteme der elektrischen Maschinen jeweils einen hohen Wirkungsgrad besitzen. Dies wird vielfach dadurch erreicht, dass große Abwärmflächen in den Kühlkanälen des Kühlsystems zur Verfügung gestellt werden, um eine optimale Kühlwirkung zu erzielen.

Eine hochwirksame Kühlung kann insbesondere durch flüssige Kühlmittel erreicht werden. Die Kühlmittel sind im jeweiligen Kühlsystem ausreichend dicht abzuschließen. Nur so lässt sich auf Dauer der Verlust des Kühlmittels vermeiden.

Die oben angesprochenen Probleme wurden bislang wie folgt gelöst: die Kühlung bei einem wassergekühlten Gehäusemotor erfolgte beispielsweise über die vier Ecken eines Strangpressprofils, das den Kühlmantel beziehungsweise das Gehäuse des Motors darstellt. Hierbei ist die Umfangsbedeckung (d.h. der Anteil der Kühloberfläche zur Gesamtfläche) des Kühlsystems nur ca. 35% der Oberfläche beziehungsweise Gesamtfläche des Motors. Somit ist die Kühlwirkung entsprechend niedrig. Die Abdichtung zwischen den Lagerschilden und dem eckigen Profilkühlmantel erfolgt über eine Flachdichtung beziehungsweise durch ein Flüssigdichtmittel. Diese Dichtsysteme können bei hohen Drücken und Temperaturen zu Problemen führen.

Die Aufgabe der vorliegenden Erfindung besteht somit darin, ein Kühlsystem für eine elektrische Maschine vorzuschlagen, das geringe Herstellungskosten und einen hohen Wirkungsgrad besitzt.

Erfindungsgemäß wird diese Aufgabe gelöst durch einen Kühlmantel für eine elektrische Maschine,
- der als Strangpressprofil hergestellt ist,
- der mehrere in Richtung des Pressstrangs des Strangpressprofils verlaufende Stege aufweist, wobei
- jeder Steg zwei benachbarte Kühlkanäle des Kühlmantels voneinander trennt,
- die Kühlkanäle des Kühlmantels ein mäanderförmiges Kühlsystems bilden und
- senkrecht zu den Stegen verlaufende Passagen des Kühlsystems jeweils gebildet sind durch
   o je eine Aussparung in jedem der Stege an einer der Stirnseiten des Kühlmantels oder
   o Aussparungen in Lagerschilden, die an den Stirnseiten des Kühlmantels befestigt sind.

In vorteilhafter Weise kann somit ein kostengünstig herstellbares Strangpressprofil für den Kühlmantel verwendet werden. In einer Ausführungsvariante sind nach dem Strangpressen lediglich stirnseitig einige Stege zu kürzen beziehungsweise mit Aussparungen zu versehen, sodass durch den gesamten Kühlmantel ein mäanderförmiger Kühlstrom gewährleistet werden kann. In einer alternativen Ausführungsform werden das oder die Lagerschilde mit entsprechenden Aussparungen zum Umlenken des Kühlmittels in Umfangsrichtung ausgestattet. Prinzipiell können die Techniken zum Umlenken in Umfangsrichtung auch kombiniert werden. D.h. es können auf der einen Stirnseite des Kühlmantels Aussparungen in Stegen vorgesehen sein, während auf der anderen Seite des Kühlmantels Aussparungen in einem Lagerschild vorhanden sind, wobei letztlich immer ein mäanderförmiger Kühlmittelstrom gewährleistet ist.

Vorzugsweise ist der Kühlmantel zylinderförmig ausgebildet. Dies hat den Vorteil, dass die elektrische Maschine einschließlich des Kühlmantels sehr kompakt gebildet sein kann, da die eigentliche elektrische Maschine in der Regel ebenfalls kreiszylinderförmige Gestalt besitzt.

Gemäß einer alternativen Ausführungsform kann der Kühlmantel auch prismenförmig ausgebildet sein, wobei die Grund- und Deckfläche des jeweiligen Prismas ein Mehreck bildet. Insbesondere kann die Grundfläche eines solchen prismenförmigen Kühlmantels quadratisch ausgebildet sein. Die Ecken des Kühlmantels beziehungsweise der kompletten elektrischen Maschine werden dabei vielfach zur Befestigung der elektrischen Maschine verwendet.

In besonders bevorzugter Ausführungsform ist der Kühlmantel aus Aluminium gepresst. Dieses Metall zeichnet sich nicht nur durch sein geringes Gewicht, sondern auch durch seine hohe Wärmeleitfähigkeit aus.

Wird ein Lagerschild zum Umlenken des Kühlstroms um die Stege des Strangpressprofils eingesetzt, so kann das Lagerschild aus Aluminium oder Grauguss gegossen sein. Während Grauguss deutlich höhere Festigkeitswerte aufweist, zeichnet sich Aluminium, wie soeben erwähnt, durch hohe thermische Leitfähigkeit und Leichtigkeit aus.

Der erfindungsgemäße Kühlkanal kann mindestens drei, insbesondere zwölf Kühlkanäle besitzen, die zueinander parallel in Richtung des Pressstrangs verlaufen. Dabei ist es besonders von Vorteil, wenn der Kühlmantel zwei konzentrische Mantelteile aufweist, die im Wesentlichen nur durch die Stege miteinander verbunden sind. Dadurch wird der Kühlmantel nahezu überall an seinem Umfang von Kühlmittel durchströmt. Damit kann ein entsprechend hoher Kühlwirkungsgrad erzielt werden. Die Anzahl der Stege sollte möglichst gering gewählt werden, wobei stets die geforderte Festigkeit des Kühlmantels zu gewährleisten ist.

Wie bereits angedeutet wurde, ist besonders vorzugsweise eine elektrische Maschine mit einem derartigen Kühlmantel ausgestattet. Dabei kann es sich nicht nur um einen Elektromotor, sondern auch um einen Generator handeln. Darüber hinaus können mit dem Kühlmantel nicht nur rotatorische Antriebe, sondern auch Linearantriebe versehen werden.

Hinsichtlich der Dichtigkeitsproblematik ist es günstig, wenn der Kühlmantel kreiszylinderförmig ausgebildet ist und die Kühlkanäle an den Stirnseiten des Kühlmantels durch mindestens einen O-Ring pro Stirnseite abgedichtet sind. O-Ringe an Bauteilgrenzen haben grundsätzlich den Vorteil, dass sie leichter montierbar sind und besser abdichten. Darüber hinaus sind sie auch leichter herzustellen.

Die vorliegende Erfindung wird nun anhand der beigefügten Zeichnungen näher erläutert, in denen zeigen:
- FIG 1: eine Schrägansicht eines als Strangpressprofil hergestellten erfindungsgemäßen Kühlmantels;
- FIG 2: eine vergrößerte Ansicht eines Ausschnitts der Stirnseite des Kühlmantels von FIG 1;
- FIG 3: einen Servomotor mit einem Kühlmantel in Schrägansicht, wobei die äußere Wand des Kühlmantels zwecks Erkennung des mäanderförmigen Kühlmittelstroms nicht dargestellt ist und
- FIG 4: einen Querschnitt durch eine Stirnseite des Kühlmantels und eines daran abgedichteten Lagerschilds.

Die nachfolgend näher geschilderten Ausführungsbeispiele stellen bevorzugte Ausführungsformen der vorliegenden Erfindung dar.

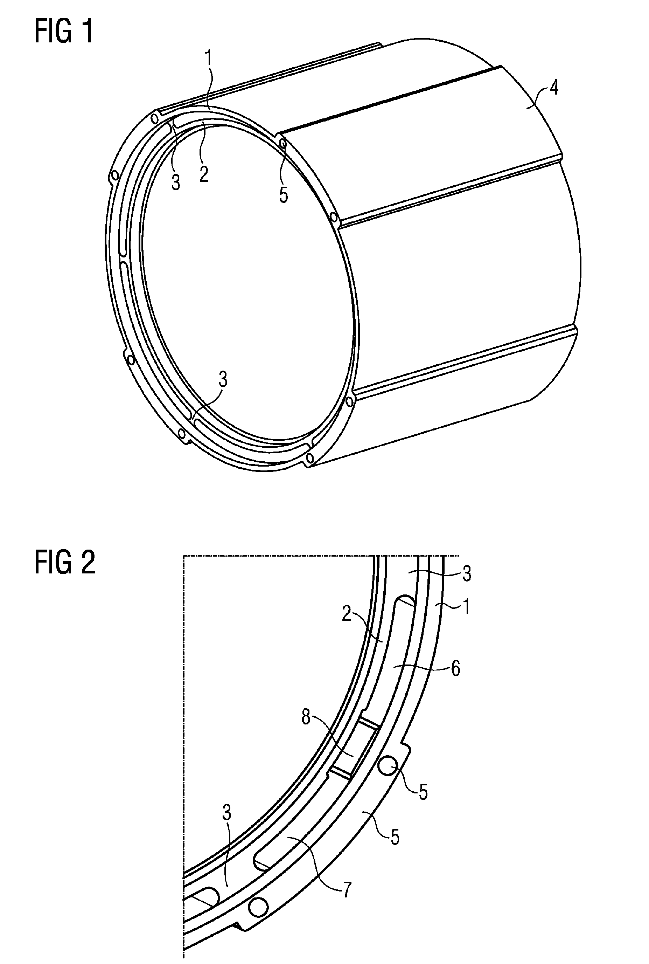

In FIG 1 ist ein rohrförmiger Kühlmantel in Schrägansicht wiedergegeben. Der Kühlmantel besitzt also im Wesentlichen die Form eines Mantels eines Kreiszylinders. Er ist doppelwandig ausgestaltet und besitzt eine rohrförmige Außenwand 1 und eine dazu konzentrisch angeordnete rohrförmige Innenwand 2. Die beiden Wände 1 und 2 sind durch Stege 3 voneinander beabstandet. Die Stege 3 verlaufen in axialer Richtung bezogen auf die Rohr- beziehungsweise Zylinderform des Kühlmantels. Diese axiale Richtung entspricht der Richtung des Pressstrangs beziehungsweise der Pressstrangrichtung.

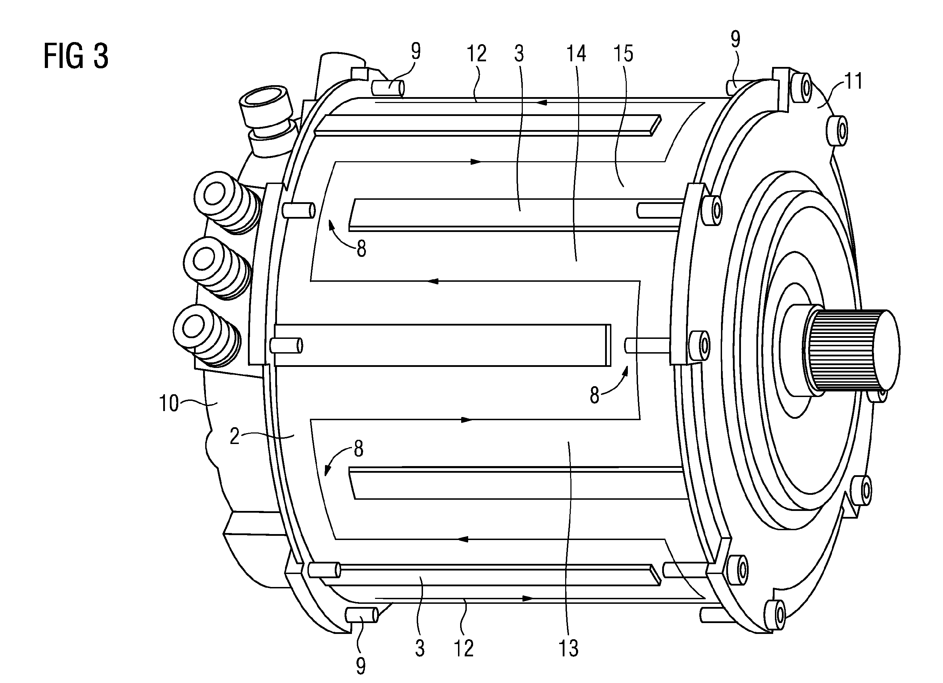

An der Außenseite des Außenmantels sind hier Befestigungselemente 4 vorgesehen, mit denen der Kühlmantel durch axial verlaufende Schrauben an Lagerschilden befestigt werden kann (vergleiche FIG 3). Dazu besitzen die Befestigungselemente 4 entsprechende Löcher 5 in axialer Richtung.

Unmittelbar nach dem Pressen besitzt der Kühlmantel an jeder axialen Stelle den gleichen Querschnitt. Dies wiederum bedeutet, dass der Kühlmantel ohne großen Aufwand in jeder gewünschten Länge hergestellt werden kann.

FIG 2 stellt einen Ausschnitt aus der Stirnseite des Kühlmantels von FIG 1 dar. Zwischen der Außenwand 1 und der Innenwand 2 befinden sich die Kühlkanäle 6, 7. Sämtliche Kühlkanäle des Kühlmantels sind in Umfangsrichtung durch Stege 3 begrenzt. Im vorliegenden Beispiel besitzt der Kühlmantel zwölf Kühlkanäle und damit auch zwölf Stege 3 in axialer Richtung.

In dem Beispiel von FIG 2 ist das stirnseitige Ende des Stegs 3 zwischen den Kühlkanälen 6 und 7 herausgefräst, sodass eine Aussparung 8 entsteht. Diese Aussparung 8 ermöglicht, dass Kühlmittel von dem Kühlkanal 6 in den Kühlkanal 7 fließt (oder umgekehrt), wenn der Kühlmantel stirnseitig verschlossen ist. Die Aussparung 8 schafft damit eine Verbindung zwischen benachbarten Kühlkanälen 6, 7 in Umfangsrichtung. Der Querschnitt der Aussparung 8 sollte in etwa so gewählt werden wie der Querschnitt eines Kühlkanals 6, 7, sodass der Strömungswiderstand in den Kühlkanälen 6, 7 in etwa gleich ist wie in der Aussparung 8. Bei Bedarf kann der Querschnitt der Aussparung 8 jedoch auch anders gewählt werden.

In FIG 3 ist ein Servomotor mit dem erfindungsgemäßen Kühlmantel dargestellt. Allerdings ist in der Figur der Außenmantel bzw. die Außenwand 1 nicht eingezeichnet, um den Kühlmittelstrom im Inneren des Kühlmantels erkennen zu können. Von dem Kühlmantel ist also im Wesentlichen die Innenwand 2 zu erkennen, auf der, radial nach außen ragend Stege 3 in axialer Richtung verlaufen. Der Kühlmantel ist mit axial verlaufenden Schrauben 9 zwischen zwei Lagerschilde 10 und 11 geschraubt. Dabei sind die Schrauben 9 in die Löcher 5 (vergleiche FIG 1 und FIG 2; nicht dargestellt in FIG 3) eingeschraubt.

Deutlich zu erkennen sind in FIG 3 auch die Aussparungen 8 an den Stegen 3. Die Aussparungen 8 befinden sich bei jedem in Umfangsrichtung zweiten Steg 3 an dem A-seitigen Lagerschild 11 und bei den dazwischen liegenden Stegen 3 an dem B-seitigen Lagerschild 10. Dadurch kann sich zwischen Außenwand 1 und Innenwand 2 ein mäanderförmiger Kühlmittelstrom 12 ausbilden. Der Kühlmittelstrom 12 fließt also beispielsweise in axialer Richtung durch einen Kühlkanal 13 zwischen zwei Stegen 3 hindurch auf das A-seitige Lagerschild 11 zu. Am Lagerschild 11 wird er umgelenkt und fließt in Umfangsrichtung in den benachbarten Kühlkanal 14. Dort fließt das Kühlmittel gegenüber der Flussrichtung im Kühlkanal 13 in entgegen gesetzter Richtung hin zum B-seitigen Lagerschild 10. Dort wird es wieder umgelenkt und durch eine Aussparung 8 in den nächsten benachbarten Kühlkanal 15 gedrückt. Der Kühlmittelstrom setzt sich so mäanderförmig fort.

Die gleichmäßige mäanderförmige Umspülung des Servomotors mit Kühlmedium wird erreicht durch die am gesamten Umfang des Servomotors angeordneten Kühlkanäle 6, 7 beziehungsweise 13, 14, 15. Die Umlenkung des Kühlmediums erfolgt in dem Beispiel von FIG 3 durch Öffnungen beziehungsweise Aussparungen 8 in den Stegen 3 an den Stirnseiten des Kühlmantels. Alternativ besteht auch die Möglichkeit, dass die Umlenkung des Kühlmediums an den Stirnseiten des Kühlmantels in den jeweiligen Lagerschilden erfolgt. In diesem Fall werden im Bereich der Stirnflächen der Stege 3 Vertiefungen in die Lagerschilde eingebracht. Beispielsweise werden die Lagerschilde 10, 11 aus Aluminium oder Grauguss gegossen und es werden zur Kühlmittelumlenkung entsprechende Taschen als Vertiefungen eingegossen. Die Vertiefungen sind dann am Umfang wieder so verteilt, dass sich der mäanderförmige Kühlmittelstrom 12 ergibt. Die Dimensionen der Taschen in den Lagerschilden sind dann wieder im Hinblick auf einen geeigneten Strömungswiderstand zu wählen.

Der komplette Kühlkreislauf befindet sich ausschließlich innerhalb des Kühlmantels mit der Ausnahme, dass sich bei einer der oben genannten Ausführungsformen das Umlenken des Kühlmittelstroms in den Lagerschilden abspielen kann.

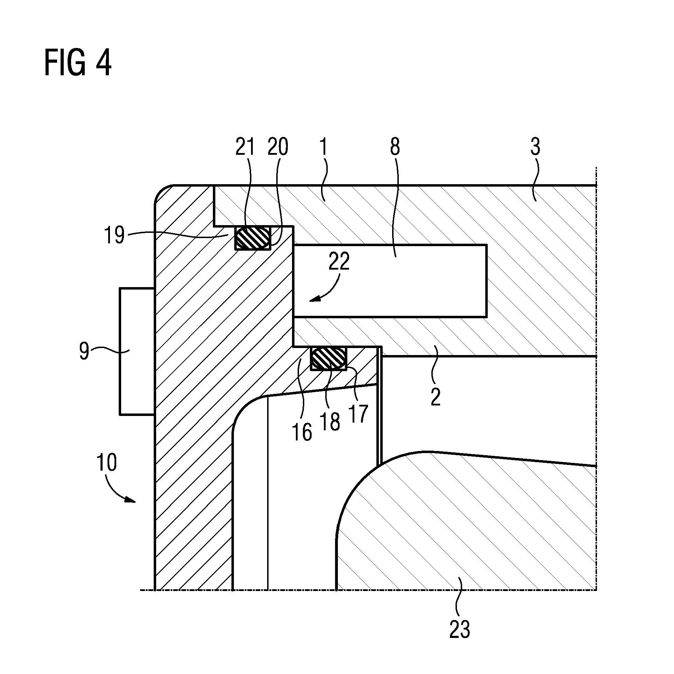

Stirnseitig ist der Kühlmantel beispielsweise wie in FIG 4 abgeschlossen. Die FIG 4 zeigt einen axialen Längsschnitt durch einen Steg 3 des Kühlmantels an dessen Stirnseite, die durch das Lagerschild 10 abgeschlossen ist. Es ist die Außenwand 1 und die Innenwand 2 des Kühlmantels zu erkennen, die durch den Steg 3 miteinander verbunden sind. In dem Steg 3 befindet sich die Aussparung 8, durch die das Kühlmittel senkrecht zur Zeichnungsebene, also in Umfangsrichtung strömen kann.

Die dem Kühlmantel zugewandte Seite des Lagerschilds 10 ist stufig ausgebildet. Der Kühlmantel selbst ist mit korrespondierenden Stufen an seiner Stirnseite versehen. Eine erste Stufe 16 liegt in radialer Richtung an der Innenseite der Innenwand 2 beziehungsweise an einem abgedrehten Teil davon an. Die Stufe 16 besitzt in Umfangsrichtung eine Nut 17, in die ein O-Ring 18 eingelegt ist. Der O-Ring 18 dichtet somit das Kühlsystem gegenüber der Innenseite des Motors ab. Speziell erfolgt so die Dichtung zwischen der ersten Stufe 16 und der inneren Wand 2.

Relativ zu der ersten Stufe 16 befindet sich radial weiter oben und axial weiter außen eine zweite Stufe 19. Sie liegt radial an der Außenwand 1 des Kühlmantels beziehungsweise einem abgedrehten Teil davon an. Ebenfalls besitzt sie eine in Umfangsrichtung verlaufende Nut 20, in der auch ein O-Ring 21 eingelegt ist. Der O-Ring 21 dichtet die zweite Stufe 19 gegenüber der Außenwand 1 und damit das Kühlsystem gegenüber der Außenwelt ab.

Der axiale Abschluss der Kühlkanäle erfolgt durch einen Ringabschnitt 22 des Lagerschilds 10, der die erste Stufe 16 mit der zweiten Stufe 19 verbindet. Dieser ringförmige Abschnitt 22 ist in FIG 4 als radial verlaufende Wand zu erkennen. Insgesamt stellt die stufige Ausprägung des Lagerschilds 10 und der Stirnseite des Kühlmantels eine Labyrinthdichtung dar.

In FIG 4 ist außerdem eine Schraube 9 zu erkennen, mit der das Lagerschild 10 an den Kühlmantel angeschraubt ist. Ferner ist in die Figur ein Wickelkopf 23 der elektrischen Maschine eingezeichnet.

Mit der großflächigen, mäanderförmigen Kühlung lässt sich eine hohe Kühlwirkung und damit einhergehend auch eine hohe Leistungsdichte des Motors beziehungsweise der elektrischen Maschine erzielen. Darüber hinaus gewährleisten die O-Ringe eine einfache und sichere Abdichtung des Kühlkreislaufs. Dadurch sind auch hohe Drücke im Kühlsystem möglich.

Da der Kühlmantel aus einem Strangpressprofil hergestellt ist, kann es nicht zu Undichtigkeiten aufgrund von Lunkern (typischen Hohlräumen bei Guss) beziehungsweise Poren kommen. Folglich treten auch weniger Ausfälle aufgrund derartiger Lunker beziehungsweise Poren auf.

Zudem ermöglicht das Strangpressprofil geringe Wandstärken des Kühlmantels und somit einen sehr kompakten und kostengünstigen Aufbau des Kühlsystems. Außerdem ist eine hohe Flexibilität hinsichtlich der Länge des Kühlmantels und der Schnittstellenanforderungen gegeben.

## Patentansprüche

1. Kühlmantel für eine elektrische Maschine,
- der als Strangpressprofil hergestellt ist,
- der mehrere in Richtung des Pressstrangs des Strangpressprofils verlaufende Stege (3) aufweist, wobei
- jeder Steg (3) zwei benachbarte Kühlkanäle (6,7,13,14, 15) des Kühlmantels voneinander trennt,
**dadurch gekennzeichnet, dass**
- die Kühlkanäle (6,7,13,14,15) des Kühlmantels Teil eines mäanderförmigen Kühlsystems sind und
- senkrecht zu den Stegen (3) verlaufende Passagen des Kühlsystems jeweils gebildet sind durch
o je eine Aussparung (8) in jedem der Stege (3) an einer der Stirnseiten des Kühlmantels oder
o Aussparungen in Lagerschilden (10,11), die an den Stirnseiten des Kühlmantels befestigt sind.

2. Kühlmantel nach Anspruch 1, der kreiszylinderförmig ausgebildet ist.

3. Kühlmantel nach Anspruch 1, der prismenförmig ausgebildet ist.

4. Kühlmantel nach einem der vorhergehenden Ansprüche, der aus Aluminium gepresst ist.

5. Kühlmantel nach einem der vorhergehenden Ansprüche, wobei die Lagerschilde aus Aluminium oder Grauguss gegossen sind.

6. Kühlmantel nach einem der vorhergehenden Ansprüche, der mindestens drei, insbesondere zwölf Kühlkanäle (6,7,13,14, 15) besitzt, die zueinander parallel in Richtung des Pressstrangs verlaufen.

7. Elektrische Maschine mit einem Kühlmantel nach einem der vorhergehenden Ansprüche.

8. Elektrische Maschine nach Anspruch 7, wobei der Kühlmantel gemäß Anspruch 2 kreiszylinderförmig ist und die Kühlkanäle (6,7,13,14,15) an den Stirnseiten des Kühlmantels durch einen O-Ring (18,21) pro Stirnseite abgedichtet sind.
